# EUROPEAN PATENT SPECIFICATION

(11) **EP 2 206 980 B1**
(45) Date of publication and mention of the grant of the patent: **10.01.2018**
(21) Application number: 09177670.8
(22) Date of filing: 01.12.2009
(51) Int. Cl.: F24F 6/04, F28C 1/02, F24F 5/00, F28F 25/08

(54) **Adiabatic humidification device, particularly for air cooling units**
Adiabatische Befeuchtungsvorrichtung, insbesondere für Luftkühlungseinheiten
Dispositif d'humidification adiabatique, en particulier pour des unités de refroidissement d'air

(30) Priority: 04.12.2008 IT MI20082147
(43) Date of publication of application: 14.07.2010
(73) Proprietor: M.I.T.A. Materiali Isolanti Termotecnici ed antinquinamento S.r.l. in via breve M.I.T.A.S.r.l., 27010 Siziano (PV) (IT)
(72) Inventor: Fontana, Alessandro, 20144 Milano (IT)
(74) Representative: Modiano, Micaela Nadia

(56) References cited:
- FR-A- 2 441 812
- US-A- 3 526 393
- US-A- 4 427 607
- US-A- 4 478 767
- US-A- 4 562 015
- US-A1- 2005 056 042
- US-A1- 2006 000 227

## Description

The present invention relates to an adiabatic humidification device particularly for air cooling units.

In the field of air cooling units and of cooling machines in general, in order to increase their inefficiency, air humidification devices are widespread which can be divided into two main categories: those that comprise a humidifying pack and the atomizing devices.

As regards the former, the humidifying pack consists of contoured panels, which are glued to each other so as to form a monolithic body that defines a plurality of passage channels for the water that is sprayed onto the humidifying pack.

Such panels are typically made of sheets of absorbent paper, for example made of cellulose, which are impregnated with resins which, in addition to giving mechanical strength, provide protection against decomposition processes, so as to allow impregnation with water, sprayed onto them by means of sprayers, which is subsequently absorbed by an air flow that passes through the humidifying pack.

More precisely, crossing of the humidifying pack by the air occurs, in known devices, substantially at right angles to the water spraying direction.

If the air flow passes through the humidifying pack in a horizontal direction through the passage channels thereof, the water that is sprayed from above in fact passes through the humidifying pack and descends due to the permeability of the cellulose sheets that constitute the humidifying pack and by gravity.

Typically, this air humidification method is used for cooling units of the adiabatic type, because the air, by absorbing water and thus becoming humid, undergoes a temperature of drop without any heat exchange.

The performance of humidification devices is measured by the efficiency of temperature reduction and the increase in humidity of the air.

More precisely, both temperature reduction efficiency and humidification efficiency, which correspond respectively to the ratio between the drop in the dry-bulb temperature of the air and the hypothetical drop in dry-bulb air temperature if saturation humidity of the air (i.e., with UR = 100%) is reached and to the ratio between the increase in relative humidity of the air between the inlet and the outlet and the hypothetical increase in relative humidity of the air between the inlet and the outlet if the equivalent wet-bulb temperature is reached, are linked to the capacity for exchange of water between the humidifying pack and the air that is filtered through it.

This water exchange is the more effective the more time the air is able to stay in contact with the exchange surfaces of the humidifying pack.

The longer the air remains in contact with the exchange surfaces, the more the air becomes loaded with water, increasing the degree of efficiency of the humidification device.

For being able to prolong this contact time, conventional types of humidification devices opt for two different solutions: the first one consists in assembling large humidifying packs and the second one consists in limiting as much as possible the passage speed of the air flow.

As regards the increase in the dimensions of the humidifying packs, this entails an increase in efficiency to the detriment of higher running and manufacturing costs, which are linked respectively to the dimensions of the humidifying packs and to an increase in the load losses of the air flow that exits from the humidification device.

The more the path of the air is complex and long, the more energy must be spent to overcome the resistance of the air to be filtered through the humidifying pack.

As regards a reduction of the speed of the air flow, this leads to an increase in efficiency due to an increase in crossing times and a reduction in load losses. In this manner, however, the air flow rate that can be handled by the humidification device per unit time decreases, thus reducing the productivity of the device.

These known humidification devices are not devoid of drawbacks, which include the fact that since a compromise solution between the amount of air that is treated and the quality of the treatment must be found, the speed of the air flow has a value that is usually comprised between 1 m/s and 2.8 m/s, in order to have humidification and temperature reduction efficiency values comprised, depending on the configuration of the humidifying pack, between 80% and 95% with an air flow speed of 1 m/s and between 67% and 87% with an air flow speed of 2.8 m/s, thus limiting the potential of humid air that can be treated by the humidification device.

Another disadvantage of known types of humidification devices consists in that the humidifying pack requires uniform and continuous wetting and therefore water consumption affects considerably the operating costs of such device.

Moreover, frequent wetting of the humidifying pack can give rise to the diffusion of water drops in the entire humidification device, thus entailing an unwanted deposition of water on the surfaces struck by the air flow that is treated, with consequent formation of molds and the like which make the humidification device scarcely hygienic.

Air humidification devices are further known which are based on the atomization of water in an air flow. In this manner, the atomized water particles are mixed with the air flow, causing the humidification of the air.

This last known humidification technique, which is generally used also in the refrigeration of enclosed spaces, also suffers the drawback of facilitating the transport, by the air flow, of water drops that have formed incorrectly during the atomization process, thus entailing an unwanted deposition of water on the surfaces struck by the treated air flow, with the consequent formation of molds and the like which make the humidification device scarcely hygienic.

Document US 2005/056042 discloses an indirect and non-adiabatic air cooling system, in which an indirect heat exchanger 12 with dry passages for indirect cooling of air 20 is shown. The provided cooled air flow 20, is dry cooled, indirectly at the heat exchanger 12 and evaporator 62. Exhaust air flow 22 is used to cool the walls of heat exchanger 12, at sub-wet bulb, dew point temperature, by evaporation, while passing through wet passages. Air flow 22, before being exhausted, is heated and de-humidified at, i.e takes heat from condenser 60. Heat exchange to exterior occurs for the (dry) air flow 20, that cools at an evaporator 62, connected to a compressor 58. Heat exchange also occurs for water from distributor 40 that cools over condenser 60 connected also to compressor 58. At condenser 60 exhausted air flow 22 takes heat from condenser 60 and leaves condensed water. The condenser 60 that is connected to a compressor 58 introduces into/takes heat from the system. Only wet surfaces of the exchanger 12, and not the whole plates forming the exchanger that includes also the dry surfaces of the same plates, are treated or coated to wick water therethrough.

Document US 2006/000227 discloses a two-stage, sequential, indirect -and- direct air cooling, that requires heat exchange with the exterior, being therefore non-adiabatic. The cooling device 10 is formed of two sections. A first section 72 is an indirect cooling stage, where dry, hot air 96 is first dry cooled in dry passages 92. Wet passages for cooling are disclosed in a heat exchanger of such first stage/section that are formed by wet sides of plates 70, only these wet sides being coated with flocked rayon-based material. Part of the dry cooled air 98 is further direct-cooled in the second, direct cooling section 110. Second, direct cooling section 110, is composed of an evaporative medium made of fluted sheets of cellulosic paper treated with a preservative. Hence, the "wet passages" in the direct-cooling, evaporative stage 110, are made of foraminous paper.

The aim of the present invention consists in providing an air humidification device, particularly of the adiabatic type, for use in air cooling units, which allows the humidification of an air flow with a higher efficiency than the background art.

Within this aim, an object of the present invention is to provide a humidification device that entails a lower water consumption than the background art.

Another object of the present invention consists in providing a humidification device in which the water that is used is not deposited incorrectly on surfaces that are struck by the treated air flow, in order to maintain a hygienic and healthy environment.

A further object of the present invention consists in providing a humidification device that is simple in construction, so as to entail competitive production costs.

This aim, as well as these and other objects that will become better apparent hereinafter, are achieved by an adiabatic humidification device, particularly for air cooling units, which has the features set forth in claim 1. A method for air humidification, according to the invention, comprises the steps set forth in claim 11. Further characteristics and advantages of the present invention will become apparent from the description of a preferred but not exclusive embodiment of an adiabatic humidification device, particularly for air cooling units, according to the invention, illustrated by way of non-limiting example in the accompanying drawing, wherein:
Figure 1 is a schematic lateral elevation view of an embodiment of an adiabatic humidification device, particularly for air cooling units, according to the present invention;
Figure 2 is a perspective view of a humidifying pack of the adiabatic humidification device shown in Figure 1;
Figure 3 is a view of an example of an application of the adiabatic humidification device shown in Figure 1.

With reference to the figures, the adiabatic humidification device, particularly for air cooling units, generally designated by the reference numeral 1, comprises a box-like body 2, which forms a path for the humidification of an air flow 3 produced by a partial vacuum, which is generated by suction means 4, associated with the box-like body 2 and consisting for example of axial fans 25, which air flow originates from first air intakes 5 formed on an end portion 2a of the box-like body 2 that is formed on the side opposite the suction means 4.

More particularly, the box-like body 2 contains at least one humidifying pack 6, which is interposed between the end portion 2a and the suction means 4 for humidification of the aspirated air flow 3.

The humidifying pack 6 comprises a plurality of panels 7, which are mutually connected and are contoured to provide a plurality of channels for the passage of the air flow 3 through the humidifying pack 6, with consequent adiabatic cooling and humidification of said air flow 3 to a temperature that is proximate to the wet-bulb temperature.

According to the invention, the humidifying pack 6 is made of a material of the flocked type, i.e., the type which has an external surface that is similar, in touch, to a velvet fabric.

The panels 7 are in fact made of said material of the flocked type and have the appearance of a rigid panel made for example of PVC covered on both sides by velvet surfaces for better impregnation with dispensed water, as will be explained in greater detail hereinafter, by dispensing means 8.

More particularly, the panels 7 have an undulated profile with a pitch between one undulation and the next that is substantially equal to 13 millimeters, so as to define passage channels with a cross-section for the passage of the air flow 3 whose dimension is equal to 13 millimeters.

As regards the dispensing means 8, they can comprise a plurality of spray nozzles 9 which are arranged in mutual alignment for the uniform spraying of the humidifying pack 6.

Advantageously, the spraying of the humidifying pack 6 occurs by flushing and wetting it by means of water that is directed in countercurrent with respect to the direction of the air flow 3 that passes through the humidifying pack 6.

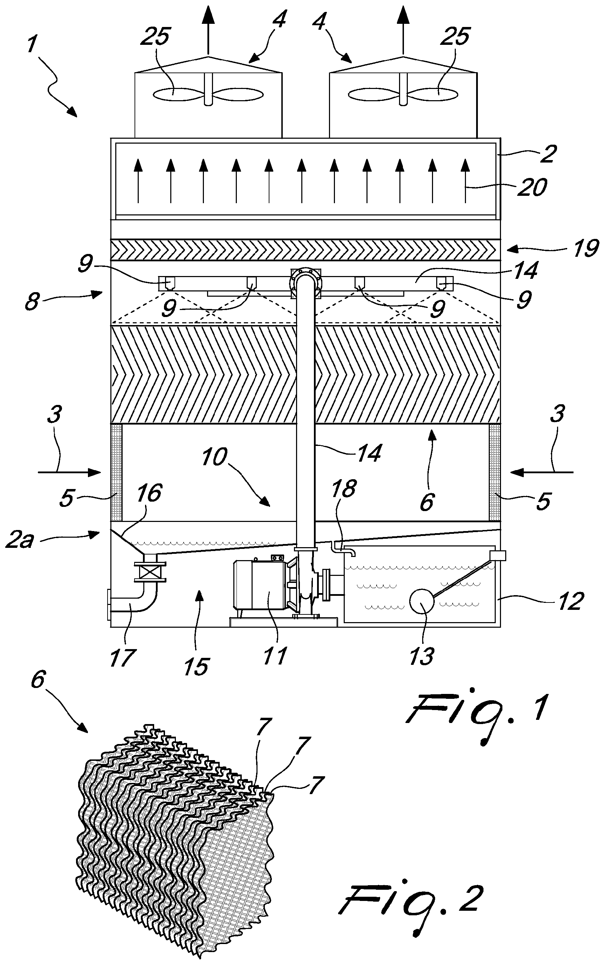

In a generic configuration, such as the one shown in Figure 1, the spray nozzles 9 can be arranged above the humidifying pack 6 with respect to the vertical direction in order to flush it by means of gravity.

Accordingly, the humidification path of the air flow 3 is directed from the bottom upward.

As an alternative to the spray nozzles 9, it is also possible to use a water dispersion system of the gravitational type (with an open trough and an overflow, or with parallel pipes with an upward slot, or similar systems).

This is done in order to eliminate even the slightest formation of drops caused by pressurized spraying.

The supply of the spray nozzles 9 can be entrusted for example to a water pumping system 10, which comprises at least one electric pump 11 that is adapted to pump water from an accumulation tank 12 to the dispensing means 8 through one or more ducts 14.

More precisely, in order to maintain a constant water level, the accumulation tank 12 can be provided with a float valve 13.

Advantageously, in order to recover the water that drips from the humidifying pack 6, the humidification device 1 can comprise a water recovery system 15, which comprises a recovery tank 16, arranged below the humidifying pack 6 and forming a discharge duct 17 and a recovery duct 18, respectively, for discharging at least part of the water recovered from the recovery tank 16 into the water discharge system and directing at least part of the recovered water, again from the tank 16, into the accumulation tank 12.

For greater safety, although the humidifying pack 6 has been conceived in order to avoid the separation of any water drops that might be entrained by the air stream 3 that has been filtered through said humidifying pack 6, drop separation means 19 can be comprised which are arranged downstream of the humidifying pack 6 for intercepting the humidified air flow 3 and retaining any entrained water drops.

For further greater safety, and despite the presence of drop separation means, during the spraying in the wetting step for the humidifying pack 6 the air flow generated by the axial fans 25 decreases and is brought to the minimum level or even excluded completely, for eliminating even the slightest outward entrainment of water drops.

Subsequently, the humidified and filtered air flow 20 is free to flow toward the suction means 4, refrigerating a selected object.

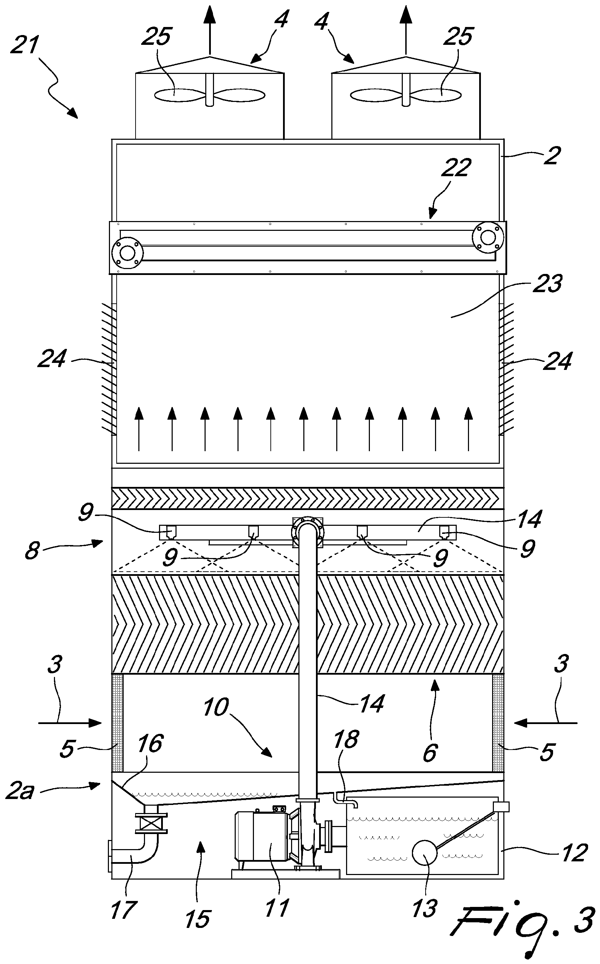

An example of application of the humidification device 1 can consist in an air cooling unit 21, shown in Figure 3.

Typically, air cooling units 21 comprise an adiabatic humidification device 1, such as the one described according to the invention, which is adapted to direct a humidified and filtered air flow 20 for example toward a heat exchanger 22.

In the illustrated example, the heat exchanger 22 is accommodated within the box-like body 2 proximately to the suction means 4. In particular, the humidification device 1 is an integral part of the cooling unit 21.

Therefore, the flow of humidified and filtered air 20 strikes around the outer surfaces of the heat exchanger 22, which can consist for example of at least one battery of finned tubes struck by the air flow 20 for cooling of a fluid contained within said tube battery.

For optimization of the transfer of heat by forced convection between the air flow 20 and the heat exchanger 22, the cooling unit 21 can comprise at least one calm region 23 that is formed directly by the box-like body 2 and is arranged between the drop separation means 19 and the heat exchanger 22 in order to eliminate any turbulent motions of the air flow 20.

Advantageously, in order to afford energy saving if allowed by the atmospheric conditions, the cooling unit 21 can be used even under complete exclusion of the humidification device 1 from the cooling of the heat exchanger 22.

If the air outside the cooling unit 21 is in fact fresh enough to cool the heat exchanger 22, it can be aspirated directly through second air intakes 24 formed on the box-like body 2 in the calm region 23 for the dry operation of the cooling unit 21, thus avoiding the operation of the underlying humidification device 1.

More precisely, the second air intakes 24 are formed by shutters installed on the box-like body 2.

Operation of the adiabatic humidification device 1 particularly for air cooling units, for example for air cooling unit 21, is evident from what has been described.

In particular it must be stressed that the air humidification method used by said humidification device 1 comprises a step for wetting the humidifying pack 6, which consists in spraying it at time intervals comprised substantially between 10 and 30 minutes for a wetting time substantially equal to 30 seconds simultaneously with a step for the passage of the air flow 3 through the passage channels defined by the shape of the panels 7 for the adiabatic cooling and humidification of the air flow 3 to a temperature that is close to the wet-bulb temperature.

As already noted, this passage occurs in countercurrent with respect to the water flushing direction at an average speed that is substantially higher than, or equal to, 2 m/s, making it possible to reach humidification efficiency and temperature reduction efficiency values substantially higher than 85%.

In order to measure the performance of a humidifying pack 6 provided according to the invention, experimental tests have been carried out with a test station that simulates the humidification device 1 described earlier.

The test station can be provided, in addition to the components already described, with functional accessories, with instruments for monitoring and recording experimental data, and with technical solutions conceived specifically for comparing the performance of the humidifying pack 6 according to the invention with known humidifying packs.

More particularly, the test station, which has a total vertical extension of approximately 3.5 meters, comprises a box-like body 2 made of fiberglass reinforced plastic and provided with a transparent side panel for visual monitoring of the wetting of the humidifying pack 6.

More precisely, the box-like body 2 is shaped like a parallelepiped substantially with a square base with a cross-section that can vary according to the region.

Starting from below, the end portion 2a is divided into a first lower region, whose height is equal to 650 mm and in which part of the water pumping system 10 and the water recovery system 15 are accommodated, and a second lower region, whose height is equal to 600 mm and on which the first air intakes 5 are provided.

Advantageously, the first air intakes 5 are provided on the four lateral faces of the box-like body 2 by openings provided with grilles in order to prevent the entry of foreign objects.

Said lower regions have a transverse cross-section that has a substantially square base whose side is equal to approximately 1200 mm.

As regards the water pumping system 10 and the system, it comprises an electric pump 11 of the centrifugal type with high capacity, for ensuring a water flow-rate equal to 7 m³/h, needed to wet the humidifying pack 6 completely and uniformly.

With this water flow-rate, it has been found from the experimental tests carried out that in order to have an operation of the adiabatic humidification device 1 with a substantially constant performance, it is sufficient to wet the humidifying pack approximately every 20-25 minutes for a wetting time of approximately 30 seconds.

The water pumped from the accumulation tank 12 by the electric pump 11 is directed to the dispensing means 8 by means of a duct 14 which is external to the box-like body 2.

Continuing vertically, a central region is encountered which is approximately 1000 mm high and defines the accommodation of the humidifying pack 6 and of the dispensing means 8.

In greater detail, the dispensing means 8 comprise nine spray nozzles 9, which are arranged on a 3 x 3 grid with uniform spacing, which ensures uniform spraying of the humidifying pack 6.

The vertical space occupation of the dispensing means 8, added to the vertical path traced by the water before wetting the humidifying pack 6, is equal to 400 mm.

Advantageously, the central region has a transverse cross-section at the humidifying pack 6 that is equal to 1 m², so as to facilitate performance measurements by relating them to the unit surface.

Of course, the humidifying pack 6, accommodated in the central region of the box-like body 2, also has a cross-section of 1 m², and as described earlier is composed of modular panels 7 made of flocked material whose dimensions in millimeters are 1200 x 300 x 300 (where "300" is equal to the lateral vertical extension of the generic modular panel 7).

In greater detail, the modular panels 7 are associated one another so as to form a humidifying pack 6 whose height is equal to 600 mm.

Advantageously, the choice to have a humidifying pack with a maximum height of 600 mm, as will be demonstrated in greater detail hereinafter, is the optimum solution for obtaining a significant increase in efficiency and for containing the vertical extension of the test station.

Continuing upward, the test station is composed of an end region, whose height is approximately equal to 1000 mm and comprises a first part, which defines the calm region 23, and a second part, in which the suction means 21 are installed.

More particularly, this end region has a wider cross-section that is again equal to approximately 1400 mm and ends with a hood on which an axial fan 25 is installed which has a diameter of 800 mm and is preassembled by the company ZIEHL ABEGG Italia S.r.l., Dolo, Italy, selected for a maximum air flow-rate of 12.000 m³/h, which corresponds to a maximum speed of the air in the passage section of interest equal to 3.33 m/s at a supply frequency of 50 Hz.

It must be noted that between the end region and the central region there is an intermediate region whose height is equal to 250 mm and in which the drop separation means 19 are arranged.

As already mentioned, in order to obtain performance measurements of the humidifying pack 6 used in the test station, so as to have a comparison with the performances of known types of humidifying packs, a number of functional accessories and instruments for monitoring and recording experimental data have been installed on the test station.

Such accessories and instruments are composed of a flow-rate measurement device and a flow-rate adjustment valve, which are installed on the external portion of the duct 14, between the electric pump 11 and the dispensing means 8, for identifying the optimum instantaneous quantity of water needed to keep the humidifying pack 6 wet, an inclined-tube differential pressure gauge installed in the central region for measuring the load losses of the air caused by the passage of the air flow through the humidifying pack 6, and finally two digital thermo-hygrometers, which are installed respectively at the first air intakes 5 and at the outlet of the axial fan 25 for measuring the temperature and relative humidity conditions of the air before and after the adiabatic humidification process.

Moreover, the test station is provided with an electrical monitoring and control panel for the safe operation of the components that belong to said test station.

In particular, the electrical panel makes it possible to manage the rotation rate of the axial fan 25 by acting on the supply frequency by means of an inverter and on the operation of the electric pump 11 both continuously, i.e., in relation to the duration, and at intervals, i.e., in relation to the operating frequency.

The experimental tests were carried out during the warm season, i.e., from the end of May to early August, so as to make the adiabatic humidification device 1 operate in temperature and relative humidity conditions of the air that are optimum for measuring the performance of the humidifying pack 6.

In particular, three different tests were carried out with an air flow speed through the humidifying pack 6 of 2 m/s (30.5 Hz), 3 m/s (46 Hz), and 3.3 m/s (50 Hz), respectively.

Three tables that summarize the experimental tests carried out for the three cited speeds are provided hereafter:

| **Table no. 1: frequency 50 Hz with P = Pₐₜₘ = 1.01325 bar** | | | | | | | | | | | |
|---|---|---|---|---|---|---|---|---|---|---|---|
| **Date** | **In input** | | | **In output** | | | **ΔTₘᵢₙ** | **Δh** | **Tbu** | **Eff. T** | **Eff. U** |
| | **Tbs** | **UR** | **h** | ***Tbs*** | ***UR*** | ***h*** | | | | | |
| 21 May | 20.8 | 63.0 | 45.41 | 16.3 | 92.0 | 44.73 | // | -0.68 | 16.24 | 0.877 | 0.784 |
| 26 May | 23.8 | 60.9 | 52.49 | 19.2 | 95.0 | 52.92 | // | 0.43 | 18.56 | 0.878 | 0.872 |
| 26 May | 23.3 | 61.4 | 51.35 | 18.9 | 95.1 | 52.01 | // | 0.67 | 18.20 | 0.863 | 0.873 |
| 26 May | 23.1 | 64.0 | 51.99 | 19.3 | 95.5 | 53.42 | // | 1.43 | 18.40 | 0.808 | 0.875 |
| 27 May | 25.5 | 60.0 | 56.88 | 20.3 | 95.2 | 56.56 | // | -0.31 | 19.90 | 0.929 | 0.880 |
| 27 May | 25.4 | 59.0 | 56.06 | 20.5 | 95.0 | 57.15 | // | 1.09 | 19.66 | 0.854 | 0.878 |
| 27 May | 25.4 | 59.1 | 56.11 | 20.7 | 94.0 | 57.42 | // | 1.31 | 19.68 | 0.821 | 0.853 |
| 27 May | 25.4 | 58.2 | 55.64 | 21.2 | 89.5 | 57.26 | // | 1.62 | 19.53 | 0.716 | 0.749 |
| 28 May | 24.5 | 65.0 | 56.51 | 20.1 | 96.0 | 56.21 | // | -0.30 | 19.78 | 0.933 | 0.886 |
| 28 May | 24.7 | 64.0 | 56.60 | 20.2 | 96.5 | 56.73 | // | 0.14 | 19.81 | 0.921 | 0.903 |
| 11 June | 26.4 | 49.0 | 53.39 | 19.8 | 92.8 | 54.02 | <15 | 0.63 | 18.87 | 0.876 | 0.859 |
| 11 June | 26.4 | 49.0 | 53.39 | 19.9 | 91.6 | 53.89 | 15 | 0.49 | 18.87 | 0.863 | 0.835 |
| 11 June | 26.4 | 49.0 | 53.39 | 20.0 | 91.3 | 54.09 | 17.5 | 0.70 | 18.87 | 0.850 | 0.829 |
| 11 June | 26.4 | 49.0 | 53.39 | 20.1 | 90.4 | 54.06 | 20 | 0.67 | 18.87 | 0.836 | 0.812 |
| 19 June | 27.4 | 55.0 | 59.64 | 21.4 | 92.5 | 59.17 | 15 | -0.47 | 20.72 | 0.898 | 0.833 |
| 19 June | 27.4 | 55.0 | 59.64 | 21.3 | 94.0 | 59.45 | 15 | -0.19 | 20.72 | 0.913 | 0.867 |
| 23 June | 29.6 | 47.6 | 61.36 | 22.4 | 91.8 | 62.32 | <10 | 0.97 | 21.22 | 0.860 | 0.844 |
| 23 June | 29.6 | 47.6 | 61.36 | 22.5 | 91.4 | 62.50 | 10 | 1.14 | 21.22 | 0.848 | 0.836 |
| 23 June | 29.6 | 47.6 | 61.36 | 22.6 | 91.2 | 62.76 | 15 | 1.40 | 21.22 | 0.836 | 0.832 |
| 23 June | 30.8 | 45.3 | 63.22 | 22.9 | 92.0 | 64.19 | <10 | 0.97 | 21.75 | 0.873 | 0.854 |
| 23 June | 30.8 | 45.3 | 63.22 | 23.0 | 91.6 | 64.37 | 10 | 0.15 | 21.75 | 0.862 | 0.846 |
| 23 June | 31.9 | 40.8 | 62.99 | 22.9 | 91.3 | 63.87 | <10 | 0.88 | 21.70 | 0.882 | 0.853 |
| 23 June | 31.9 | 40.8 | 62.99 | 23.1 | 90.9 | 64.40 | 10 | 1.41 | 21.70 | 0.863 | 0.846 |
| 23 June | 32.6 | 42.4 | 66.27 | 23.8 | 92.4 | 67.68 | <10 | 1.41 | 22.58 | 0.879 | 0.868 |
| 24 June | 30.0 | 46.5 | 61.76 | 22.6 | 93.4 | 63.75 | <10 | 2.00 | 21.34 | 0.854 | 0.877 |
| 24 June | 31.2 | 38.9 | 59.64 | 22.1 | 91.5 | 61.14 | <10 | 1.51 | 20.76 | 0.871 | 0.861 |
| 26 June | 33.0 | 35.6 | 61.86 | 23.0 | 90.5 | 63.86 | <10 | 2.00 | 21.40 | 0.862 | 0.852 |
| 26 June | 33.0 | 35.6 | 61.86 | 23.2 | 88.8 | 63.78 | 10 | 1.92 | 21.40 | 0.845 | 0.826 |
| 26 June | 33.0 | 35.6 | 61.86 | 22.6 | 91.2 | 62.76 | 15 | 0.90 | 21.40 | 0.896 | 0.863 |
| 26 June | 33.0 | 35.6 | 61.86 | 23.1 | 90.2 | 64.08 | <10 | 2.21 | 21.40 | 0.853 | 0.848 |
| 26 June | 33.0 | 35.6 | 61.86 | 23.2 | 89.9 | 64.29 | 10 | 2.43 | 21.40 | 0.845 | 0.843 |
| 26 June | 33.0 | 35.6 | 61.86 | 23.4 | 88.2 | 64.21 | 15 | 2.34 | 21.40 | 0.828 | 0.817 |
| 27 June | 33.5 | 37.6 | 64.90 | 23.3 | 90.5 | 64.93 | // | 0.04 | 22.23 | 0.905 | 0.848 |
| 27 June | 33.4 | 40.9 | 67.40 | 23.9 | 92.8 | 68.25 | // | 0.85 | 22.89 | 0.904 | 0.878 |

| **Table no. 2: frequency 46 Hz with P = Pₐₜₘ = 1.01325 bar** | | | | | | | | | | | |
|---|---|---|---|---|---|---|---|---|---|---|---|
| **Date** | **In input** | | | **In output** | | | **ΔTₘᵢₙ** | **Δh** | **Tbu** | **Eff. T** | **Eff. U** |
| | **Tbs** | **UR** | **h** | ***Tbs*** | ***UR*** | ***h*** | | | | | |
| 02 July | 29.5 | 56.0 | 66.74 | 23.3 | 95.3 | 67.20 | 0 | 0.45 | 22.68 | 0.908 | 0.893 |
| 02 July | 29.5 | 56.0 | 66.74 | 23.5 | 95.1 | 67.86 | 5 | 1.11 | 22.68 | 0.879 | 0.889 |
| 02 July | 29.5 | 56.0 | 66.74 | 23.5 | 95.1 | 67.86 | 10 | 1.11 | 22.68 | 0.879 | 0.889 |
| 02 July | 29.5 | 56.0 | 66.74 | 23.5 | 94.5 | 67.57 | 15 | 0.83 | 22.68 | 0.879 | 0.875 |
| 02 July | 29.5 | 56.0 | 66.74 | 23.3 | 96.2 | 67.62 | 0 | 0.88 | 22.68 | 0.908 | 0.914 |
| 02 July | 29.5 | 56.0 | 66.74 | 23.2 | 95.8 | 67.06 | 5 | 0.31 | 22.68 | 0.923 | 0.905 |
| 02 July | 29.5 | 56.0 | 66.74 | 23.2 | 95.0 | 66.68 | 10 | -0.06 | 22.68 | 0.923 | 0.886 |
| 02 July | 29.5 | 56.0 | 66.74 | 23.5 | 95.9 | 68.24 | 15 | 1.50 | 22.68 | 0.879 | 0.907 |
| 02 July | 29.5 | 56.0 | 66.74 | 23.5 | 96.4 | 68.48 | 0 | 1.73 | 22.68 | 0.879 | 0.918 |
| 02 July | 29.5 | 56.0 | 66.74 | 23.5 | 95.8 | 68.19 | 5 | 1.45 | 22.68 | 0.879 | 0.905 |
| 03 July | 26.5 | 63.0 | 61.55 | 21.8 | 97.7 | 62.77 | 0 | 1.22 | 21.25 | 0.894 | 0.938 |
| 03 July | 27.4 | 60.5 | 62.92 | 21.5 | 96.5 | 61.19 | 0 | -1.73 | 21.63 | 1.023 | 0.911 |
| 03 July | 27.4 | 60.5 | 62.92 | 21.8 | 95.4 | 61.78 | 15 | -1.14 | 21.63 | 0.971 | 0.884 |
| 03 July | 29.2 | 50.5 | 62.13 | 22.2 | 94.5 | 62.81 | 0 | 0.68 | 21.43 | 0.901 | 0.889 |
| 04 July | 26.8 | 63.2 | 62.61 | 21.7 | 97.6 | 62.37 | <15 | -0.25 | 21.54 | 0.970 | 0.935 |
| 07 July | 29.5 | 49.0 | 62.01 | 22.5 | 94.5 | 63.89 | 0 | 1.87 | 21.40 | 0.865 | 0.892 |
| 07 July | 29.5 | 49.0 | 62.01 | 22.6 | 93.5 | 63.80 | 10 | 1.78 | 21.40 | 0.852 | 0.873 |
| 15 July | 27.2 | 37.4 | 48.76 | 19.0 | 91.0 | 50.86 | <10 | 2.10 | 17.41 | 0.838 | 0.856 |
| 16 July | 29.2 | 35.4 | 52.18 | 19.8 | 90.5 | 53.16 | <15 | 0.97 | 18.52 | 0.880 | 0.853 |

| **Table no. 3: frequency 30.5 Hz with P = Pₐₜₘ = 1.01325 bar** | | | | | | | | | | | |
|---|---|---|---|---|---|---|---|---|---|---|---|
| **Date** | **In input** | | | **In output** | | | **ΔTₘᵢₙ** | **Δh** | **Tbu** | **Eff. T** | **Eff. U** |
| | **Tbs** | **UR** | **h** | ***Tbs*** | ***UR*** | ***h*** | | | | | |
| 17 July | 27.8 | 51.5 | 58.69 | 21.2 | 96.9 | 60.31 | 0 | 1.61 | 20.45 | 0.898 | 0.936 |
| 28 July | 31.2 | 44.3 | 63.64 | 22.2 | 95.9 | 63.43 | 0 | -0.22 | 21.87 | 0.964 | 0.926 |
| 01 July | 30.8 | 53.2 | 68.98 | 24.2 | 87.8 | 71.89 | 0 | 2.91 | 23.27 | 0.876 | 0.953 |

where:
- Tbs refers to the measured dry-bulb temperature of the air, both in input and in output, expressed in degrees Celsius (°C);
- UR refers to the measured relative humidity of the air, both in input and in output, expressed as a percentage (%);
- h refers to the measured absolute enthalpy of the air, both in input and in output, expressed in kilojoules per kilogram (kJ/kg);
- ΔTₘᵢₙ refers to the time interval between one wetting process and the next of the humidifying pack 6, expressed in minutes (min);
- Δh refers to the enthalpy variation undergone by the air between the inlet and the outlet after being humidified by passing through the humidifying pack 6, said enthalpy variation being expressed in kilojoules per kilogram (kJ/kg);
- Tbu refers to the wet-bulb temperature of the air that is equivalent to the conditions of the air in output completely saturated with water, expressed in degrees Celsius (°C);
- Eff. T refers to the temperature reduction efficiency of the humidifying pack 6, equal to the ratio between the drop in dry-bulb temperature of the air between the input and the output and the hypothetical drop in dry-bulb temperature of the air between the input and the output if humidity saturation of the air, i.e., UR = 100%, is reached;
- Eff. U refers to the efficiency of the humidification of the humidifying pack 6, equal to the ratio between the increase in relative humidity of the air between the input and the output and the hypothetical increase in relative humidity of the air between the input and the output if the equivalent wet-bulb temperature were reached.

More precisely, a time interval equal to zero between one wetting process and the next of the humidifying pack 6 means that the measurement was performed at the beginning of the test.

Where, on the other hand, the time interval is not cited (i.e., were the sign "//" appears), this means that an instantaneous test was carried out with a single detection which was not extended over time.

Differently, the known types of humidifying packs, such as for example SANIFLOC and EUROPAD, manufactured by Eurofill S.r.l., Villasanta, Italy, in order to reach a performance that is comparable to that of the humidifying pack 6, provided according to the present invention, must work with a speed of the striking air flow, recommended by the manufacturers, comprised between 1 and 2 m/s, thus limiting the quantity of air that can be humidified.

In practice it has been found that the adiabatic humidification device particularly for air cooling units according to the present invention fully achieves the intended aim and objects, since it makes it possible to obtain an efficiency in humidification and reduction of the temperature of the air that is never below 85%, with peaks above 90%, even with speeds of the air flow passing through the humidifying pack that are very high, equal for example to 3.3 m/s.

Another advantage of the adiabatic humidification device according to the present invention is that the humidifying pack has a water absorption capacity that allows time intervals between one wetting process and the next which can vary from a minimum of 10 minutes to a maximum of 30 minutes with an operation of the electric pump which lasts 30 seconds.

The reduced use of the electric pump therefore entails a reduced consumption of water, which can vary from 120 to 360 liters per hour per unit transverse cross-section of the humidifying pack, as a function of the thermal and hygrometric conditions of the air in input.

Another advantage of the adiabatic humidification device according to the present invention is that it prevents the entrainment of water outside said device both in the form of droplets and as atomized water, due to the fact that during the step for wetting the humidifying pack the air flow generated by the axial fans decreases and is brought to the minimum level or even excluded completely, so as to eliminate even the slightest outward entrainment of water drops.

Another advantage of the adiabatic humidification device according to the present invention is that the shape and material of which the humidifying pack is made are such as to entail extremely low load losses as a consequence of the dimensions of the passage channels, which are sufficiently wide. These load losses in fact are never more than 80 pascals, even if one works with humidifying pack transit speeds that are higher than those that can be adopted with known types of humidifying packs.

A further advantage of the adiabatic humidification device according to the present invention consists in the high water retention capacity of the humidifying pack and in that the transfer of water to air is self-regulated in the direction of maximum saturation efficiency, regardless of the speed with which the air passes through the humidifying pack.

The adiabatic humidification device, particularly for air cooling units, and the air cooling unit are susceptible of numerous modifications and variations, all of which within the scope of the appended claims.

All the details may furthermore be replaced with other technically equivalent elements.

In practice, the materials used, as long as they are compatible with the specific use, as well as the contingent shapes and dimensions, may be any according to requirements and to the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An adiabatic humidification device, particularly for air cooling units, comprising a box-like body (2) that forms a path for the humidification of an air flow (3) which arrives from first air intakes (5) formed by said box-like body (2) and that contains at least one humidifying pack (6), said humidifying pack (6) comprising a plurality of panels (7) which are associated with each other and are shaped so as to provide a plurality of channels for the passage of said air flow (3) through said at least one humidifying pack (6) for the humidification and adiabatic cooling of said air flow (3) to a temperature that is proximate to the wet-bulb temperature, wherein said at least one humidifying pack (6) is made of a material of a flocked type and is flushed and wetted by water dispensing means (8) arranged, with respect to said at least one humidifying pack (6), on the side opposite the inlet of said air flow in said passage channels for directing said sprayed water in countercurrent with respect to the direction of said air flow (3), and **characterized by** comprising aspirator means (4) which are associated with said box-like body (2) to generate a partial vacuum inside said box-like body (2) that is adapted to aspirate air through said first air intakes (5) and wherein said air flow (3) is passed through said at least one humidifying pack (6) at an average speed that is substantially higher than, or equal to 2m/s; the water dispensing means (8) configured to be actuated at time intervals substantially comprised between 10 and 30 minutes for a wetting time substantially equal to 30 seconds between one wetting process and the next.

2. The device according to the preceding claim, **characterized in that** said panels (7) are made of rigid PVC covered on both sides with velvet surfaces that are adapted to retain said water dispensed by said dispensing means (8).

3. The device according to one or more of the preceding claims, **characterized in that** said dispensing means (8) comprise a plurality of spray nozzles (9), which are arranged above said humidifying pack (6) for the uniform flushing of said humidifying pack (6) from the top downward.

4. The device according to one or more of claims 1 to 2, **characterized in that** said dispensing means (8) comprise a gravity dispersion system which is arranged above said humidifying pack (6) for the uniform flushing of said humidifying pack (6) from the top downward.

5. The device according to one or more of the preceding claims, **characterized in that** it comprises a water pumping system (10) for feeding said dispensing means (8), which comprises at least one electric pump (11) adapted to pump water from an accumulation tank (12) to said dispensing means (8), said accumulation tank (12) being provided with a float valve (13) for replenishing the level of the water in said accumulation tank (12).

6. The device according to one or more of the preceding claims, **characterized in that** it comprises a water recovery system (15) for recovering the water that drips from said humidifying pack (6), said water recovery system (15) comprising a recovery tank (16), which is arranged below said humidifying pack (6) and defines a discharge duct (17) and a recovery duct (18), respectively, for discharging at least part of the water recovered from said recovery tank (16) into the water drainage system and for directing at least part of the water recovered from said recovery tank (16) into said accumulation tank (12).

7. The device according to one or more of the preceding claims, **characterized in that** it comprises drop separation means (19) which are arranged downstream of said humidifying pack (6) for intercepting said humidified air flow (3) and retaining any drops of water entrained by said humidified air flow (3).

8. An air cooling unit, **characterized in that** it comprises an adiabatic humidification device (1) according to one or more of the preceding claims and at least one heat exchanger (22), which is accommodated inside said box-like body (2) and is struck by said air flow (20) to cool a fluid inside said heat exchanger (22).

9. The air cooling unit according to claim 8, **characterized in that** it comprises at least a calm region (23), which is formed directly by said box-like body (2) for eliminating any turbulent motions of said air stream (20) and is arranged between said drop separation means (19) and said heat exchanger (22).

10. The air cooling unit according to one or more of the preceding claims 8 and 9, **characterized in that** it comprises second air intakes (24), which are defines on said box-like body (2) at said calm region (23) for the dry operation of the air cooling unit (21).

11. A method for air humidification by way of the device according to any of the claims 1-10, **characterized in that** it comprises:
- a step for wetting a humidifying pack (6) which comprises panels (7) associated one another and made of material of a flocked type that is a rigid PVC covered on both sides with velvet surfaces adapted to retain water dispensed by said dispensing means (8) arranged above said humidifying pack (6), said wetting step comprising spraying of said humidifying pack (6) at time intervals substantially comprised between 10 and 30 minutes for a wetting time substantially equal to 30 seconds between one wetting process and the next;
- a step for the transit of an air flow (3) that arrives from first air intakes (5) through passage channels defined by the shaping of said panels (7) with an average speed that is substantially higher than, or equal to, 2 m/s for the humidification and adiabatic cooling of said air flow (3) to a temperature that is close to the wet-bulb temperature, said air flow passing through said humidifying pack (6) in countercurrent with respect to the flushing direction of said water.

12. The method according to claim 11, **characterized in that** said wetting step comprises spraying of said humidifying pack (6) at time intervals that are substantially comprised between 10 and 30 minutes for a wetting time substantially equal to 30 seconds.

13. The method according to claim 12, **characterized in that** during said wetting step said air flow is slowed down or interrupted completely, so as to eliminate even the slightest outward entrainment of water drops.

## Patentansprüche

1. Eine adiabatische Befeuchtungsvorrichtung, insbesondere für Luftkühlungseinheiten, die einen kastenartigen Körper (2) umfasst, der einen Pfad für die Befeuchtung eines Luftstroms (3) bildet, welcher von ersten Lufteinlässen (5) kommt, die von dem kastenartigen Körper (2) gebildet werden, und der mindestens ein Befeuchtungspaket (6) enthält, wobei das Befeuchtungspaket (6) eine Vielzahl von Platten (7) umfasst, die miteinander verbunden und so geformt sind, dass sie eine Vielzahl von Kanälen für den Durchfluss des Luftstroms (3) durch das mindestens eine Befeuchtungspaket (6) für die Befeuchtung und adiabatische Kühlung des Luftstroms (3) auf eine Temperatur bereitstellen, die nahe der Feuchtkugeltemperatur ist, wobei das mindestens eine Befeuchtungspaket (6) aus einem Material vom geflockten Typ besteht und von Wasserabgabemitteln (8) gespült und genetzt wird, die mit Bezug auf das mindestens eine Befeuchtungspaket (6) auf der Seite gegenüber dem Einlass des Luftstroms in die Durchflusskanäle angeordnet sind, um das gesprühte Wasser in Gegenströmung zur Richtung des Luftstroms (3) zu lenken, und **dadurch gekennzeichnet, dass** sie Ansaugmittel (4) umfasst, die mit dem kastenartigen Körper (2) verbunden sind, um einen Unterdruck in dem kastenartigen Körper (2) zu erzeugen, der geeignet ist, Luft durch die ersten Lufteinlässe (5) anzusaugen, und wobei der Luftstrom (3) durch das mindestens eine Befeuchtungspaket (6) mit einer durchschnittlichen Geschwindigkeit geleitet wird, die im Wesentlichen höher als oder gleich 2m/s ist; wobei die Wasserabgabemittel (8) ausgebildet sind, um in Zeitintervallen betätigt zu werden, die im Wesentlichen zwischen 10 und 30 Minuten liegen, für eine Benetzungszeit im Wesentlichen gleich 30 Sekunden zwischen einem Benetzungsprozess und dem nächsten.

2. Die Vorrichtung gemäß dem obigen Anspruch, **dadurch gekennzeichnet, dass** die Platten (7) aus starrem PVC bestehen, auf beiden Seiten mit Samtoberflächen bedeckt, die ausgebildet sind, um das von den Abgabemitteln (8) abgegebene Wasser zurückzuhalten.

3. Die Vorrichtung gemäß einem oder mehreren der obigen Ansprüche, **dadurch gekennzeichnet, dass** die Abgabemittel (8) eine Vielzahl von Sprühdüsen (9) umfassen, die zum einheitlichen Spülen des Befeuchtungspakets (6) von oben nach unten oberhalb des Befeuchtungspakets (6) angeordnet sind.

4. Die Vorrichtung gemäß einem oder mehreren der Ansprüche 1 bis 2, **dadurch gekennzeichnet, dass** die Abgabemittel (8) ein Schwerkraftdispersionssystem umfassen, das zum einheitlichen Spülen des Befeuchtungspakets (6) von oben nach unten oberhalb des Befeuchtungspakets (6) angeordnet ist.

5. Die Vorrichtung gemäß einem oder mehreren der obigen Ansprüche, **dadurch gekennzeichnet, dass** sie ein Wasserpumpsystem (10) zur Versorgung der Abgabemittel (8) umfasst, das mindestens eine elektrische Pumpe (11) umfasst, ausgebildet, um Wasser aus einem Sammeltank (12) zu den Abgabemitteln (8) zu pumpen, wobei der Sammeltank (12) mit einem Schwimmerventil (13) zum Wiederauffüllen des Wasserstandes in dem Sammeltank (12) ausgestattet ist.

6. Die Vorrichtung gemäß einem oder mehreren der obigen Ansprüche, **dadurch gekennzeichnet, dass** sie ein Wasserrückgewinnungssystem (15) zum Rückgewinnen des Wassers umfasst, das von dem Befeuchtungspaket (6) tropft, wobei das Wasserrückgewinnungssystem (15) einen Rückgewinnungstank (16) umfasst, welcher unterhalb des Befeuchtungspakets (6) angeordnet ist und eine Ablassleitung (17) und eine Rückgewinnungsleitung (18) bestimmt, um zumindest einen Teil des Wassers, das aus dem Rückgewinnungstank (16) zurückgewonnen wurde, in das Wasserablasssystem abzulassen, und um zumindest einen Teil des Wassers, das aus dem Rückgewinnungstank (16) zurückgewonnen wurde, in den Sammeltank (12) zu leiten.

7. Die Vorrichtung gemäß einem oder mehreren der obigen Ansprüche, **dadurch gekennzeichnet, dass** sie Tropfenabscheidemittel (19) umfasst, die stromabwärts von dem Befeuchtungspaket (6) angeordnet sind, um den befeuchteten Luftstrom (3) abzufangen und eventuelle Wassertropfen zurückzuhalten, die von dem befeuchteten Luftstrom (3) mitgerissen werden.

8. Eine Luftkühlungseinheit, **dadurch gekennzeichnet, dass** sie eine adiabatische Befeuchtungsvorrichtung (1) gemäß einem oder mehreren der obigen Ansprüche und mindestens einen Wärmetauscher (22) umfasst, der in dem kastenartigen Körper (2) untergebracht ist und auf den der Luftstrom (20) auftrifft, um ein Fluid in dem Wärmetauscher (22) zu kühlen.

9. Die Luftkühlungseinheit gemäß Anspruch 8, **dadurch gekennzeichnet, dass** sie mindestens einen ruhigen Bereich (23) umfasst, der direkt von dem kastenartigen Körper (2) gebildet wird, zum Beseitigen eventueller turbulenter Bewegungen des Luftstroms (20), und zwischen den Tropfenabscheidemitteln (19) und dem Wärmetauscher (22) angeordnet ist.

10. Die Luftkühlungseinheit gemäß einem oder mehreren der obigen Ansprüche 8 und 9, **dadurch gekennzeichnet, dass** sie zweite Lufteinlässe (24) umfasst, die für den trockenen Betrieb der Luftkühlungseinheit (21) an dem kastenartigen Körper (2) in dem ruhigen Bereich (23) bestimmt sind.

11. Ein Verfahren zur Luftbefeuchtung mit der Vorrichtung gemäß einem beliebigen der Ansprüche 1-10, **dadurch gekennzeichnet, dass** es Folgendes umfasst:
- einen Schritt zur Benetzung eines Befeuchtungspakets (6), das Platten (7) umfasst, die miteinander verbunden sind und aus einem Material vom geflockten Typ bestehen, das ein festes PVC ist, auf beiden Seiten mit Samtoberfläche bedeckt, die ausgebildet sind, um Wasser zurückzuhalten, das von den Abgabemitteln (8) abgegeben wird, die oberhalb des Befeuchtungspakets (6) angeordnet sind, wobei der Benetzungsschritt das Besprühen des Befeuchtungspakets (6) in Zeitintervallen umfasst, die im Wesentlichen zwischen 10 und 30 Minuten betragen, für einen Benetzungszeitraum, der im Wesentlichen gleich 30 Sekunden zwischen einem Benetzungsprozess und dem nächsten ist;
- einen Schritt für den Durchfluss eines Luftstroms (3), der von ersten Lufteinlässen (5) kommt, durch Durchflusskanäle, die von der Formung der Platten (7) bestimmt werden, mit einer durchschnittlichen Geschwindigkeit, die im Wesentlichen höher als oder gleich 2m/s ist, zur Befeuchtung und adiabatischen Kühlung des Luftstroms (3) auf eine Temperatur, die nahe der Feuchtkugeltemperatur ist, wobei der Luftstrom in Gegenströmung zur Spülrichtung des Wassers durch das Befeuchtungspaket (6) dringt.

12. Das Verfahren gemäß Anspruch 11, **dadurch gekennzeichnet, dass** der Benetzungsschritt das Besprühen des Befeuchtungspakets (6) in Zeitintervallen umfasst, die im Wesentlichen zwischen 10 und 30 Minuten betragen, für eine Benetzungszeit, die im Wesentlichen gleich 30 Sekunden ist.

13. Das Verfahren gemäß Anspruch 12, **dadurch gekennzeichnet, dass** während des Benetzungsschritts der Luftstrom verlangsamt oder vollständig unterbrochen wird, um auch den geringsten Transport von Wassertropfen nach außen zu verhindern.

## Revendications

1. Dispositif d'humidification adiabatique, en particulier pour des rafraîchisseurs d'air, comportant un corps analogue à un coffret (2) qui forme un trajet pour l'humidification d'un flux d'air (3) qui arrive de plusieurs prises d'air (5) formées par ledit corps analogue à un coffret (2) et qui contient au moins un bloc humidificateur (6), ledit bloc humidificateur (6) comprenant une pluralité de panneaux (7) associés les uns aux autres et façonnés afin de réaliser une pluralité de canaux pour le passage dudit flux d'air (3) à travers ledit au moins un bloc humidificateur (6) pour l'humidification et le refroidissement adiabatique dudit flux d'air (3) jusqu'à une température très proche de la température humide, ledit au moins un bloc humidificateur (6) étant en matière de type floqué et étant arrosé et mouillé par des moyens de distribution d'eau (8) disposés, par rapport audit au moins un bloc humidificateur (6), du côté opposé à l'entrée dudit flux d'air dans lesdits canaux de passage pour diriger ladite eau projetée à contre-courant par rapport à la direction dudit flux d'air (3), et **caractérisé en ce qu'**il comporte des moyens d'aspiration (4) associés audit corps analogue à un coffret (2) pour créer un vide partiel à l'intérieur dudit corps analogue à un coffret (2) qui est conçu pour aspirer de l'air à travers lesdits premières prises d'air (5) et dans lequel ledit flux d'air (3) est amené à passer à travers ledit au moins un bloc humidificateur (6) à une vitesse moyenne sensiblement supérieure ou égale à 2 m/s, les moyens de distribution d'eau (8) étant conçus pour être actionnés périodiquement sensiblement toutes les 10 à 30 minutes pour un temps de mouillage sensiblement égal à 30 secondes entre un processus de mouillage et le suivant.

2. Dispositif selon la revendication précédente, **caractérisé en ce que** lesdits panneaux (7) sont en PVC rigide recouvert, sur les deux faces, de surfaces en velours conçues pour retenir ladite eau distribuée par lesdits moyens de distribution (8).

3. Dispositif selon une ou plusieurs des revendications précédentes, **caractérisé en ce que** lesdits moyens de distribution (8) comprennent une pluralité de buses d'aspersion (9), qui sont disposées au-dessus dudit bloc humidificateur (6) pour l'arrosage uniforme, de haut en bas, dudit bloc humidificateur (6).

4. Dispositif selon la/les revendications 1et/ou 2, **caractérisé en ce que** lesdits moyens de distribution (8) comprennent un système de dispersion gravitaire disposé au-dessus dudit bloc humidificateur (6) pour l'arrosage uniforme, de haut en bas, dudit bloc humidificateur (6).

5. Dispositif selon une ou plusieurs des revendications précédentes, **caractérisé en ce qu'**il comporte un système de pompage (10) d'eau pour alimenter lesdits moyens de distribution (8), qui comprend au moins une pompe électrique (11) conçue pour pomper de l'eau dans un réservoir d'accumulation (12) et la fournir auxdits moyens de distribution (8), ledit réservoir d'accumulation (12) étant muni d'un clapet à flotteur (13) pour compléter le niveau de l'eau dans ledit réservoir d'accumulation (12).

6. Dispositif selon une ou plusieurs des revendications précédentes, **caractérisé en ce qu'**il comporte un circuit de récupération d'eau (15) pour récupérer l'eau qui s'égoutte depuis ledit bloc humidificateur (6), ledit circuit de récupération d'eau (15) comprenant un réservoir de récupération (16), lequel est disposé sous ledit bloc humidificateur (6) et définit un conduit de refoulement (17) et un conduit de récupération (18) respectivement pour refouler dans le circuit d'évacuation d'eau, depuis ledit réservoir de récupération (16), au moins une partie de l'eau récupérée et pour diriger jusque dans ledit réservoir d'accumulation (12), depuis ledit réservoir de récupération (16), au moins une partie de l'eau récupérée.

7. Dispositif selon une ou plusieurs des revendications précédentes, **caractérisé en ce qu'**il comporte des moyens de séparation de gouttes (19) qui sont disposés en aval dudit bloc humidificateur (6), pour intercepteur ledit flux d'air humidifié (3) et retenir toute goutte d'eau entraînée par ledit flux d'air humidifié (3).

8. Rafraîchisseur d'air, **caractérisé en ce qu'**il comporte un dispositif d'humidification adiabatique (1) selon une ou plusieurs des revendications précédentes et au moins un échangeur de chaleur (22), lequel est logé à l'intérieur dudit corps analogue à un coffret (2) et est frappé par ledit flux d'air (20) pour refroidir un fluide à l'intérieur dudit échangeur de chaleur (22).

9. Rafraîchisseur d'air selon la revendication 8, **caractérisé en ce qu'**il comporte au moins une région calme (23), laquelle est formée directement par ledit corps analogue un coffret (2) pour éliminer tout mouvement turbulent dudit courant d'air (20) et est disposée entre lesdits moyens de séparation de gouttes (19) et ledit échangeur de chaleur (22).

10. Rafraîchisseur d'air selon une ou plusieurs des revendications précédentes 8 et 9, **caractérisé en ce qu'**il comporte des secondes prises d'air (24), lesquelles sont définies sur ledit corps analogue à un coffret (2) dans ladite région calme (23) pour le fonctionnement à sec du rafraîchisseur d'air (21).

11. Procédé pour l'humidification d'air à l'aide du dispositif selon l'une quelconque des revendications 1 à 10, **caractérisé en ce qu'**il comporte :
- une étape pour mouiller un bloc humidificateur (6) qui comprend des panneaux (7) associés les uns avec les autres et en matière de type floqué qui est un PVC rigide recouvert, sur les deux faces, de surfaces en velours conçues pour retenir l'eau distribuée par lesdits moyens de distribution (8) disposés au-dessus dudit bloc humidificateur (6), ladite étape de mouillage comprenant l'aspersion dudit bloc humidificateur (6) périodiquement sensiblement toutes les 10 30 minutes pour un temps de mouillage sensiblement égal à 30 secondes entre un processus de mouillage et le suivant ;
- une étape pour la circulation d'un flux d'air (3), qui arrive de premières prises d'air (5), à travers des canaux de passage définis par le façonnage desdits panneaux (7), à une vitesse moyenne sensiblement supérieure ou égale à 2 m/s pour l'humidification et le refroidissement adiabatique dudit flux d'air (3) jusqu'à une température proche de la température humide, ledit flux d'air passant à travers ledit bloc humidificateur (6) à contre-courant par rapport à la direction d'arrosage de ladite eau.

12. Procédé selon la revendication 11, **caractérisé en ce que** ladite étape de mouillage comprend l'aspersion dudit bloc humidificateur (6) périodiquement sensiblement toutes les 10 à 30 minutes pour un temps de mouillage sensiblement égal à 30 secondes

13. Procédé selon la revendication 12, **caractérisé en ce que**, pendant ladite étape de mouillage, ledit flux d'air est ralenti ou interrompu complètement de façon à éliminer même le moindre entraînement de gouttes d'eau vers l'extérieur.
